# EUROPÄISCHE PATENTSCHRIFT

(11) **EP 2 708 204 B1**
(45) Veröffentlichungstag und Bekanntmachung des Hinweises auf die Patenterteilung: **31.01.2018**
(21) Anmeldenummer: 13184079.5
(22) Anmeldetag: 12.09.2013
(51) Int. Cl.: A61C 1/05

(54) **Zahnärztliches Präparationsinstrument mit Kühlmediumabgabe**
Dental preparation instrument with cold medium delivery
Instrument de préparation pour la médecine dentaire doté d'une distribution de fluide de refroidissement

(30) Priorität: 13.09.2012 DE 102012216332
(43) Veröffentlichungstag der Anmeldung: 19.03.2014
(73) Patentinhaber: Sirona Dental Systems GmbH, 64625 Bensheim (DE)
(72) Erfinder: Goisser, Siegfried, 64683 Einhausen (DE); Ertugrul, Metin, 63322 Rödermark (DE); Bierbaum, Thomas, 64625 Bensheim (DE)
(74) Vertreter: Sommer, Peter

(56) Entgegenhaltungen:
- EP-A1- 0 236 820
- EP-A1- 0 379 459
- EP-A2- 0 547 468
- EP-A2- 1 247 495

## Beschreibung

### Technisches Gebiet

Die Erfindung betrifft ein zahnärztliches Präparationsinstrument mit Kühlmediumabgabe, wobei es sich bei dem Kühlmedium um Wasser oder um ein als Spray oder Spraystrahl bezeichnetes Gemisch aus Wasser und Luft handelt.

### Stand der Technik

Aus der DE 101 16 418 A1 und aus der EP0379459 ist ein zahnärztliches Handstück bekannt, bei dem Wasser über eine Düsenanordnung mit mehreren Düsen auf ein rotierendes Werkzeug gespritzt wird.
Aus der DE 10 2006 053 083 A1 ist ein Handstück mit Kühlmediumzufuhr bekannt, bei dem über eine erste Leitung Wasser und über eine zweite Leitung Luft zu einer gemeinsamen Düse oder zu zwei getrennten Düsen transportiert wird, um auf die Behandlungsstelle abgegeben zu werden.
Die Aufgabe der Erfindung besteht darin, die Bauhöhe gering zu halten und gleichzeitig bei einer Verringerung der Zahl der Einzelteile die Abdichtung der Medien zueinander und gegenüber der Umgebung sicherzustellen.

### Darstellung der Erfindung

Ein erfindungsgemäßes zahnärztliches Präparationsinstrument weist ein in einem Kopf angeordnetes Werkzeug auf, wobei der Kopf auf einer dem Werkzeug zugewandten Stirnseite eine sich in axialer Richtung in den Kopf hinein erstreckende ringförmige Nut zur Aufnahme eines Sprayrings aufweist, über den Wasser und Luft auf das Werkzeug gerichtet abgegeben wird. Das Wasser und die Luft wird durch den Kopf der Nut zugeführt und tritt in den Sprayring ein, wobei der Sprayring mit der Nut einen Wasserspeicherraum und einen Luftspeicherraum bildet und wobei zumindest der Wasserspeicherraum gegenüber dem Kopf abgedichtet ist. Die Nut weist eine erste Öffnung auf, über die das Wasser der Nut zugeführt wird und eine zweite Öffnung, über die die Luft der Nut zugeführt wird. Der Sprayring trennt den Wasserspeicherraum mittels einer sich über den Umfang erstreckenden Trennwand gegen den Luftspeicherraum ab, wobei sich die Trennwand radial nach außen erstreckt und ein umlaufendes freies Ende aufweist. An dem freien Ende der Trennwand ist eine umlaufende Dichtfläche angeordnet, die in montiertem Zustand des Sprayrings unter Vorspannung dichtend entweder als ausschließliche Axial- oder als ausschließliche Radialdichtung an einer axialen bzw. radialen Anlagefläche in der Nut anliegt wobei die Trennwand in eingebautem Zustand elastisch oder elastisch-plastisch verformt ist. Durch die Ausführung des Sprayrings in Integralbauwiese mit einer Dichtfunktion ist es möglich, Einzelteile einzusparen und die Bauhöhe zu reduzieren.
Vorteilhafterweise kann die erste Öffnung in einem Nutgrund der Nut liegen und die zweite Öffnung in der äußeren Mantelfläche der Nut. Dies hat den Vorteil, dass die Bauhöhe durch den Sprayring gering gehalten werden kann. Grundsätzlich ist zwar auch eine zusätzliche radiale Zuführung des Wassers in der Mantelfläche denkbar, was dann allerdings zu einer Vergrößerung der Bauhöhe führt, die aber immer noch annehmbar sein kann. Die Trennwand ist in eingebautem Zustand elastisch oder elastisch-plastisch verformt, um die erforderliche Dichtkraft bereitzustellen.
Die Ausführung als Axialdichtung hat gegenüber einer Radialdichtung den Vorteil, dass die Beanspruchung der Trennwand geringer ist als bei einer Radialdichtung. Hierdurch können die Toleranzen im Vergleich zur Variante als Radialdichtung großzügiger gewählt werden ohne dass dadurch die Trennwand überbeansprucht wird oder aber die Dichtfunktion verloren geht. Auch findet im Einpressvorgang auf der Dichtfläche keine große Relativbewegung zwischen der Trennwand und der Nutfläche statt, da die Dichtkraft in der Richtung des Zusammenfügens aufgebracht wird. Die Gefahr eines Verkantens ist hierdurch deutlich geringer und damit ist der Sprayring montagefreundlicher. Ein Totalausfall der Dichtfunktion infolge eines Verkantens oder Beulens kann leichter vermieden werden.

Wenn die an dem freien Ende der Trennwand angeordnete umlaufende Dichtfläche in montiertem Zustand des Sprayrings als Radialdichtung an einer radialen Anlagefläche in der Nut unter Vorspannung anliegt, wird der axiale Bauraum noch weiter verringert.

Vorteilhafterweise kann der Sprayring radiale Befestigungsflächen aufweisen, die mit Befestigungsflächen an der äußeren und an der inneren Mantelfläche der Nut zusammenwirken und über die der Sprayring in der Nut befestigt ist und kann der Sprayring radiale Dichtflächen aufweisen, die mit Dichtflächen an der äußeren und an der inneren Mantelfläche der Nut zusammenwirken und über die der Sprayring gegenüber der Umgebung abgedichtet ist, wobei die Befestigungsflächen vorzugsweise als Dichtflächen ausgebildet sein können.

Dies hat den Vorteil, dass sowohl eine Befestigung als auch eine Abdichtung erreicht wird.

Vorteilhafterweise kann zwischen der Nut und dem Sprayring eine wasserdichte Pressverbindung oder eine Verbindung mit einem dichtenden Verbindungsmittel, etwa Klebstoff oder Lot, vorhanden sein. Dadurch wird das Heraustreten von Wasser verhindert.

Vorteilhafterweise kann der Sprayring eine von der Dichtfläche der Trennwand beabstandete axiale Anschlagfläche aufweisen, die mit einer innerhalb der Nut oder außerhalb der Nut an der Stirnseite angeordneten axialen Anlagefläche zusammenwirkt, wobei die axiale Anschlagfläche die axiale Verformung der Trennwand beim Einbringen des Sprayrings in die Nut begrenzt.

Mit dem Axialanschlag lässt sich erreichen, dass die Vorspannkraft bei der Montage genau eingestellt ist und dass eine zu große Verformung vermieden wird.

Gemäß einer Weiterbildung kann der Sprayring an seiner inneren Mantelfläche oder kann die Nut an der inneren Mantelfläche eine axiale Führungsfläche aufweisen, die gegenüber der Befestigungsfläche radial versetzt ist, sodass die Führungsfläche am Sprayring oder an der Nut zu der jeweiligen Befestigungsfläche an der Nut oder an dem Sprayring ein Spiel aufweist.

Dies vereinfacht den Montageprozess, indem das Zusammenfügen und das anschließende Verpressen oder Verbinden mit Klebstoff oder Lot erleichtert wird.

Vorteilhafterweise kann der Sprayring sowohl für den Wasserspeicherraum als auch für den Luftspeicherraum eine oder mehrere mit dem Wasserspeicherraum und eine oder mehrere mit dem Luftspeicherraum verbundene Düsen aufweisen, welche jeweils eine auf der Stirnseite angeordnete Auslassöffnung aufweisen. Über die Düsen können das Wasser und die Luft getrennt voneinander und einzeln gerichtet abgegeben werden.

Vorteilhafterweise können die Düsen im Sprayring zueinander benachbart angeordnet sein, wobei die Düse für das Wasser radial innenliegend und die Düse für die Luft radial außenliegend angeordnet ist und wobei die Düsen unter einem Winkel zu einer Rotationsachse auf das Werkzeug ausgerichtet sind und dass der Austrittswinkel der Düse für das Wasser kleiner als der Austrittswinkel der Düse für die Luft ist. Dies hat zur Folge, dass sich der ausgetretene Wasserstrahl mit dem ausgetretenen Luftstrahl kreuzt.

### Kurze Beschreibung der Zeichnungen

Ein erfindungsgemäßes Präparationsinstrument wird anhand der Zeichnung erläutert. Es zeigen:
- Fig. 1: eine schematisch Darstellung eines zahnärztliches Präparationsinstruments mit einem in einem Kopf angeordneten Werkzeug und mit einem Spraystrahl;
- Fig. 2: ein Ausschnitt des Kopfes an seiner dem Werkzeug zugewandten Stirnseite mit einem in eine Nut eingebrachten Sprayring;
- Fig. 3: eine Draufsicht auf die in die Nut eingebrachte Seite des Sprayrings;
- Fig. 4: den Sprayring von der Stirnseite her gesehen;
- Fig. 5: eine alternative Befestigung des Sprayrings im Kopf;
- Fig. 6: eine Ausbildung des Sprayrings mit einem Austritt eines auf das Werkzeug gerichteten Wasserstrahls und eines Luftstrahls im Detail;
- Fig. 7: eine Ausführung mit einem bündigen Sprayring mit innerhalb der Nut angeordneten axialen Anschlagflächen.

### Ausführungsbeispiel

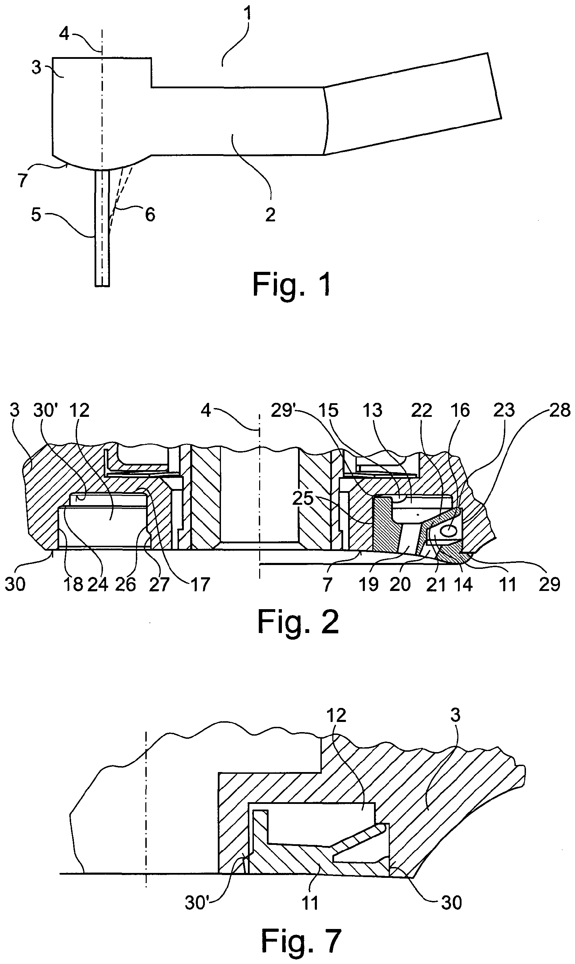

In Fig. 1 ist ein zahnärztliches Präparationsinstrument 1 schematisch dargestellt, welches ein Griffteil 2 und einen sich daran anschließenden Kopf 3 aufweist, in welchem ein um eine Rotationsachse 4 rotierendes Werkzeug 5 gehalten ist. Aus dem Kopf tritt auf seiner dem Werkzeug 5 zugewandten Stirnseite 7 ein Spraystrahl 6 aus, der aus Luft und Wasser erzeugt ist, die über nicht dargestellte innenliegende Leitungen im Griffteil 2 dem Kopf 3 zugeführt werden.

In Fig. 2 ist ein Ausschnitt des Kopfes 3 an seiner dem Werkzeug zugewandten Stirnseite und um die Rotationsachse 4 herum gezeigt, wobei das Werkzeug aus Gründen der Übersichtlichkeit der Darstellung aus dem Kopf 3 entnommen wurde. Dabei ist in der Figur rechts der Kopf 3 mit einem in den Kopf eingebrachten Sprayring 11 dargestellt, über den Wasser und Luft auf das Werkzeug gerichtet abgegeben wird.

In der linken Seite der Figur ist aus Gründen der Übersichtlichkeit der Sprayring 11 nicht dargestellt, sodass eine in der Stirnseite des Kopfes 3 angeordnete, den Sprayring 11 aufnehmende und sich in axialer Richtung in den Kopf 3 hinein erstreckende ringförmige Nut 12 erkennbar ist, welche zum Werkzeug hin geöffnet ist. Der Sprayring 11 begrenzt zusammen mit der Nut 12 einen Wasserspeicherraum 13 und einen Luftspeicherraum 14.

Das Wasser und die Luft wird der Nut 12 durch den Kopf 3 zugeführt, wozu die Nut 12 eine erste Öffnung 15 aufweist, über die das Wasser der Nut 12 zugeführt wird und eine zweite Öffnung 16, über die die Luft der Nut 12 zugeführt wird. Die erste Öffnung 15 kann in einem Nutgrund 17 der Nut 12 und die zweite Öffnung 16 kann in der äußeren Mantelfläche 18 der Nut 12 liegen.

Der Sprayring 11 weist sowohl für den Wasserspeicherraum 13 als auch für den Luftspeicherraum 14 eine oder mehrere mit dem Wasserspeicherraum 13 und eine oder mehrere mit dem Luftspeicherraum 14 verbundene Düsen 19, 20 auf, welche jeweils eine auf der Stirnseite 7 angeordnete Auslassöffnung aufweisen.

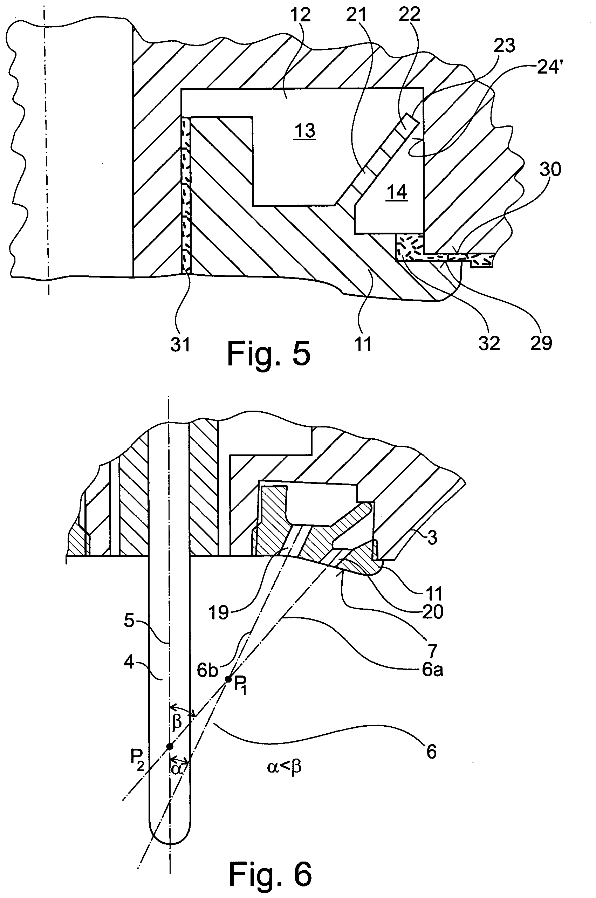

Fig. 6 zeigt eine Ausbildung des Sprayrings 11 mit einem Austritt eines auf das Werkzeug 5 gerichteten, den Spraystrahl 6 erzeugenden Luftstrahls 6a und eines Wasserstrahls 6b im Detail. Die Düsen 19, 20 sind zueinander benachbart angeordnet, wobei die Düse 19 für das Wasser radial innenliegend und die Düse 20 für die Luft radial außenliegend angeordnet ist. Die Düsen 19, 20 sind unter einem Winkel alpha und beta zu der Rotationsachse 4 so ausgerichtet, dass der Austrittswinkel alpha der Düse 19 für das Wasser kleiner als der Austrittswinkel beta der Düse 20 für die Luft ist, wodurch sich der auf das Werkzeug 5 gerichtete austretende Wasserstrahl 6b und der ebenfalls auf das Werkzeug gerichtete austretende Luftstrahl 6a in einem Abstand zu der Stirnseite 7 in einem Punkt P1 kreuzt und eine Zerstäubung des Wassers erfolgt. Dabei liegt der Punkt P1 stromaufwärts zu einem Punkt P2, der der gedachte Schnittpunkt zwischen der Rotationsachse 4 und dem Luftstrahl 6a ist und darüber hinaus in einem Abstand zum Werkzeug 5. Diese Art der Erzeugung eines Spraystrahls durch außenliegende Zerstäubung ist aus dem Stand der Technik bekannt.

Um ein unerwünschtes Austreten von Wasser aus dem Kopf zu vermeiden, ist der Wasserspeicherraum 13 mittels des Sprayrings 11 abgedichtet. Wie weiter in Fig. 2 dargestellt weist der Sprayring 11 zum einen eine sich über seinen Umfang erstreckende Trennwand 21 auf, die in montiertem Zustand den Wasserspeicherraum 13 gegenüber dem Luftspeicherraum 14 abtrennt. Die Trennwand 21 erstreckt sich radial nach außen und weist ein umlaufendes freies Ende 22 auf, wobei an dem freien Ende der Trennwand eine umlaufende Dichtfläche 23 angeordnet ist, die in montiertem Zustand des Sprayrings 11 unter Vorspannung dichtend an einer Anlagefläche 24 in der Nut 12 anliegt.

Zum anderen liegt der Sprayring 11 mittels einer radial innenliegenden Mantelfläche 25 an einer Dichtfläche 26 in der Nut 12 an und ist so gegenüber dem Kopf 3 abgedichtet.

Der Dichtfläche 26 in der Nut 12 ist eine Führungsfläche 27 benachbart, die ein Einfügen des Sprayrings 11 in die Nut 12 erleichtert, da ein Spiel zur Mantelfläche 25 des Sprayrings vorhanden ist.

Die Trennwand 21 ist in eingebautem Zustand elastisch oder elastisch-plastisch verformt. Die an dem freien Ende 22 der Trennwand 21 angeordnete umlaufende Dichtfläche 23 liegt in diesem Ausführungsbeispiel in montiertem Zustand des Sprayrings 11 als ausschließliche Axialdichtung an einer axialen Anlagefläche 24 in der Nut 12 unter Vorspannung an, wobei die Anlagefläche 24 auf einem Absatz in der Nut 12 angeordnet ist und dessen stirnseitige Fläche bildet. In radialer Richtung ist das Ende also frei.

Alternativ dazu kann die an dem freien Ende 22 der Trennwand 21 angeordnete umlaufende Dichtfläche 23 in montiertem Zustand des Sprayrings 11 als ausschließliche Radialdichtung an einer radialen Anlagefläche 24' in der Nut 12 unter Vorspannung anliegen, so schematisch dargestellt in Fig. 5. In axialer Richtung ist das Ende also frei.

Die Befestigung des Sprayrings 11 in der Nut 12 kann wie in der Fig. 2 dargestellt über Pressverbindungen oder über eine in Fig. 5 dargestellte Verbindung mit einem dichtenden Verbindungsmittel 31, 32, etwa Klebstoff oder Lot, hergestellt sein.

Für den Fall einer Pressverbindung wie dargestellt weist der Sprayring 11 radiale Befestigungsflächen 25, 28 auf, die mit Befestigungsflächen 18, 26 an der äußeren und an der inneren Mantelfläche der Nut 12 zusammenwirken und über die der Sprayring 11 in der Nut 12 befestigt ist. Der Sprayring 11 weist darüber hinaus eine radiale Dichtfläche 25 auf, die mit einer Dichtfläche 26 an der inneren Mantelfläche der Nut 12 zusammenwirkt und über die der Sprayring gegenüber der Umgebung abgedichtet ist, wobei im dargestellten Ausführungsbeispiel die Befestigungsfläche 25 gleichzeitig auch als Dichtfläche ausgebildet ist, um den Austritt von Wasser aus dem Wasserspeicherraum 13 zu verhindern.

Eine Abdichtung des Luftspeicherraums 14 erfolgt über die Befestigungsfläche 28 des Sprayrings 11 und über die Mantelfläche 18, wobei hier eine absolute Dichtheit von untergeordneter Bedeutung ist, da die geringfügig austretende Luft keine Beeinträchtigung für den Benutzer hat.

Der Sprayring 11 weist eine von der Dichtfläche 23 der Trennwand 21 beabstandete axiale Anschlagfläche 29 auf, die mit einer außerhalb der Nut an der Stirnseite angeordneten axialen Anlagefläche 30 zusammenwirkt. Alternativ dazu könnte ein Axialanschlag auch innerhalb der Nut bewerkstelligt werden, etwa durch die Anschlagfläche 29' und die Anlagefläche 30'.

Die Lage der axialen Anschlagfläche 29, 29' und der axialen Anlagefläche 30, 30' zueinander ist so, dass die axiale Verformung der Trennwand 21 beim Einbringen des Sprayrings in die Nut auf einen vorgegebenen Wert begrenzt ist, wenn das freie Ende 22 der Trennwand 21 mit der Dichtfläche 23 auf der Anlagefläche 24 der Nut 12 aufliegt und eine Vorspannkraft sichergestellt ist, die eine ausreichende Dichtheit bewirkt.

Die Nut 12 weist an der inneren Mantelfläche eine axiale Führungsfläche 27 auf, die gegenüber der Befestigungsfläche 26 radial versetzt ist, sodass die Führungsfläche 27 zu der Befestigungsfläche 25 an dem Sprayring 11 ein Spiel aufweist. Auch eine umgekehrte Ausführung ist möglich, bei der an dem Sprayring eine Führungsfläche angeordnet ist.

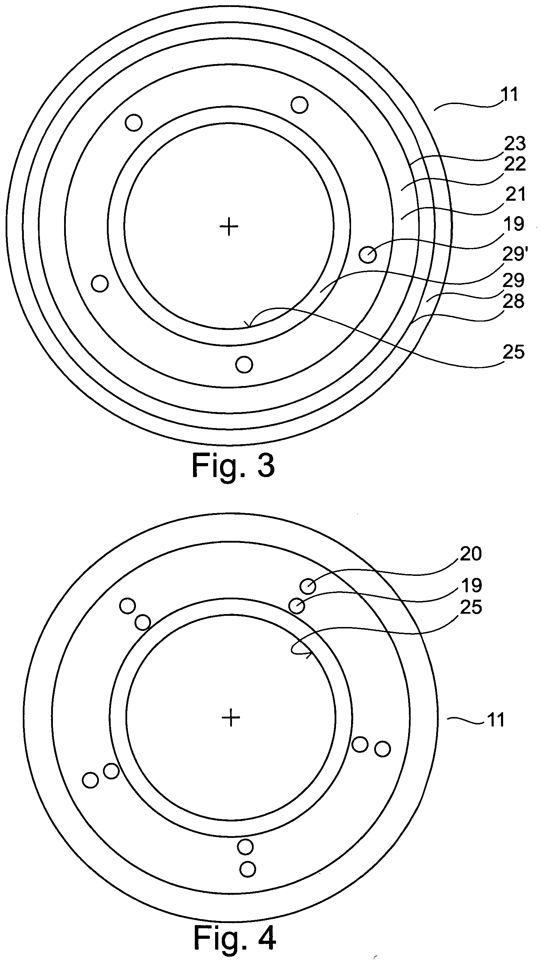

In Fig. 3 ist eine Draufsicht auf die in die Nut eingebrachte Seite des Sprayrings 11 dargestellt. Von Innen nach außen sind Konturen zu erkennen, die nachfolgend beschrieben werden. Die radiale Befestigungsfläche 25 ist die innere Mantelfläche des Sprayrings 11, von der sich radial nach außen ein Bund erstreckt, auf dem die mögliche axiale Anschlagsfläche 29' angeordnet sein kann. Der Bund entsteht dadurch, dass der Sprayring eine ringförmig umlaufende Vertiefung aufweist, um einen Wasserspeicherraum bereitzustellen. In dieser Vertiefung sind mehrere Düsen 19 angeordnet. Die Vertiefung geht in radialer Richtung über in die Trennwand 21 mit dem freien Ende 22 und der darauf angeordneten Dichtfläche 23. Weiter nach radial außen versetzt ist die radiale Befestigungsfläche 28, auf welche dann die axiale Anschlagfläche 29 folgt.

In Fig. 4 ist der Sprayring 11 von unten, also von der Stirnseite her gesehen dargestellt, wobei auch hier wieder von Innen nach außen sind Konturen zu erkennen sind, die nachfolgend beschrieben werden. An die radiale Befestigungsfläche 25 als innere Mantelfläche des Sprayrings 11 schließt sich eine sich nach außen hin erhebende Stirnfläche an, auf der die zu einander benachbarten und radial beabstandeten Auslassöffnungen der Düsen 19, 20 für Wasser und Luft angeordnet sind. Im äußeren Randbereich der Stirnfläche fällt diese wieder ab, was durch eine Übergangskontur angegeben ist.

Fig. 7 zeigt eine Ausführung mit einem bündigen Sprayring 11 mit innerhalb der Nut 12 angeordneten angeordneten radial außenliegenden oder radial innenliegenden axialen Anlageflächen 30, 30', wobei der Sprayring 11 und der Kopf 3 bündig sind, sodass die Stirnseite 7 des Kopfes sowohl durch einen Teil des Kopfes als auch durch den Sprayring gebildet sind, was zu einer zusätzlichen Verringerung der Bauhöhe führt.

## Patentansprüche

1. Zahnärztliches Präparationsinstrument (1) mit einem in einem Kopf (3) angeordneten Werkzeug (5), wobei der Kopf (3) auf seiner dem Werkzeug (5) zugewandten Stirnseite eine sich in axialer Richtung in den Kopf (3) hinein erstreckende ringförmige Nut (12) zur Aufnahme eines Sprayrings (11) aufweist, über den Wasser und Luft auf das Werkzeug (5) gerichtet abgegeben wird und wobei das Wasser und die Luft durch den Kopf (3) der Nut (12) zugeführt wird und in den Sprayring (11) eintritt und wobei der Sprayring (11) mit der Nut (12) einen Wasserspeicherraum (13) und einen Luftspeicherraum (14) bildet und dass zumindest der Wasserspeicherraum (13) gegenüber dem Kopf (3) abgedichtet ist, **dadurch gekennzeichnet, dass** die Nut (12) eine erste Öffnung (15) aufweist, über die das Wasser der Nut (12) zugeführt wird, dass die Nut (12) eine zweite Öffnung (16) aufweist, über die die Luft der Nut (12) zugeführt wird und dass der Sprayring (11) den Wasserspeicherraum (13) mittels einer sich über den Umfang erstreckenden Trennwand (21) gegen den Luftspeicherraum (14) abtrennt, wobei sich die Trennwand (21) radial nach außen erstreckt und ein umlaufendes freies Ende (22) aufweist, wobei an dem freien Ende (22) der Trennwand (21) eine umlaufende Dichtfläche (23) angeordnet ist, die in montiertem Zustand des Sprayrings (11) unter Vorspannung dichtend entweder als ausschließliche Axialdichtung an einer axialen Anlagefläche (24) oder als ausschließliche Radialdichtung an einer radialen Anlagefläche (24') in der Nut (12) unter Vorspannung anliegt, wobei die Trennwand (21) in eingebautem Zustand elastisch oder elastisch-plastisch verformt ist.

2. Zahnärztliches Präparationsinstrument nach Anspruch 1, **dadurch gekennzeichnet, dass** die erste Öffnung (15) in einem Nutgrund der Nut (12) liegt und dass die zweite Öffnung (16) in der äußeren Mantelfläche der Nut (12) liegt.

3. Zahnärztliches Präparationsinstrument nach Anspruch 1 oder 2, **dadurch gekennzeichnet, dass** der Sprayring (11) radiale Befestigungsflächen (25, 28) aufweist, die mit Befestigungsflächen (18, 26) an der äußeren und an der inneren Mantelfläche (18, 26) der Nut (12) zusammenwirken und über die der Sprayring (11) in der Nut (12) befestigt ist und dass der Sprayring (11) radiale Dichtflächen (25) aufweist, die mit Dichtflächen (26) an der äußeren und an der inneren Mantelfläche (18, 26) der Nut (12) zusammenwirken und über die der Sprayring (11) gegenüber der Umgebung abgedichtet ist.

4. Zahnärztliches Präparationsinstrument nach Anspruch 3, **dadurch gekennzeichnet, dass** die Befestigungsflächen (18, 26) des Sprayrings (11) als Dichtflächen ausgebildet sind.

5. Zahnärztliches Präparationsinstrument nach Anspruch 3 oder 4, **dadurch gekennzeichnet, dass** zwischen der Nut (12) und dem Sprayring (11) eine Pressverbindung oder eine Verbindung mit einem dichtenden Verbindungsmittel (32), etwa Klebstoff oder Lot, vorhanden ist.

6. Zahnärztliches Präparationsinstrument nach einem der Ansprüche 1 bis 5, **dadurch gekennzeichnet, dass** der Sprayring (11) eine von der Dichtfläche (23) der Trennwand (21) beabstandete axiale Anschlagfläche (29,29') aufweist, die mit einer innerhalb der Nut (12) oder außerhalb der Nut (12) an der Stirnseite angeordneten axialen Anlagefläche (30,30') derart zusammenwirkt, dass die axiale Anschlagfläche (29,29') die axiale Verformung der Trennwand (21) beim Einbringen des Sprayring (11) in die Nut (12) begrenzt.

7. Zahnärztliches Präparationsinstrument nach einem der Ansprüche 3 bis 6, **dadurch gekennzeichnet, dass** der Sprayring (11) an seiner inneren Mantelfläche oder dass die Nut (12) an der inneren Mantelfläche (26) eine axiale Führungsfläche (27) aufweist, die gegenüber der Befestigungsfläche (26) radial versetzt ist, sodass die Führungsfläche (27) am Sprayring (11) oder an der Nut (12) zu der jeweiligen Befestigungsfläche (25) an der Nut (12) oder an dem Sprayring (11) ein Spiel aufweist.

8. Zahnärztliches Präparationsinstrument nach einem der Ansprüche 1 bis 7, **dadurch gekennzeichnet, dass** der Sprayring (11) sowohl für den Wasserspeicherraum (13) als auch für den Luftspeicherraum (14) eine oder mehrere mit dem Wasserspeicherraum (13) und eine oder mehrere mit dem Luftspeicherraum (14) verbundene Düsen (19, 20) aufweist, welche jeweils eine auf der Stirnseite (7) angeordnete Auslassöffnung aufweisen.

9. Zahnärztliches Präparationsinstrument nach Anspruch 8, **dadurch gekennzeichnet, dass** die Düsen (19, 20) im Sprayring (11) zueinander benachbart angeordnet sind, wobei die Düse (19) für das Wasser radial innenliegend und die Düse (20) für die Luft radial außenliegend angeordnet ist und wobei die Düsen (19, 20) unter einem Winkel (alpha, beta) zu einer Rotationsachse (4) auf das Werkzeug (5) ausgerichtet sind und dass der Austrittswinkel (alpha) der Düse (19) für das Wasser kleiner als der Austrittswinkel (beta) der Düse (20) für die Luft ist.

## Claims

1. Dental preparation instrument (1) with a tool (5), arranged in a head (3), wherein the head (3) has on its end face, facing the tool (5), an annular groove (12), which extends in the axial direction into the head (3), for receiving a spray ring (11), by means of which water and air are discharged directed to the tool (5), and wherein the water and the air are fed through the head (3) to the groove (12) and enter into the spray ring (11), and wherein the spray ring (11) forms with the groove (12) a water storage chamber (13) and an air storage chamber (14); and that at least the water storage chamber (13) is sealed with respect to the head (3) **characterized in that** the groove (12) has a first opening (15), through which the water is fed to the groove (12); that the groove (12) has a second opening (16), through which the air is fed to the groove (12); and that the spray ring (11) separates the water storage chamber (13) from the air storage chamber (14), by means of a dividing wall (21) extending over the periphery, wherein the dividing wall (21) extends radially outwards and has a circumferential free end (22), wherein a circumferential sealing surface (23) is arranged at the free end (22) of the dividing wall (21); and in the assembled state of the spray ring (11) said sealing surface rests flush under prestress either as the exclusive axial seal against an axial abutment surface (24) or rests under prestress as the exclusive radial seal against a radial abutment surface (24') in the groove (12), wherein the dividing wall (21) is deformed elastically or elastically plastically in the installed state.

2. Dental preparation instrument, as claimed in claim 1, **characterized in that** the first opening (15) is located in a groove base of the groove (12); and that the second opening (16) is located in the outer jacket surface of the groove (12).

3. Dental preparation instrument, as claimed in claim 1 or 2, **characterized in that** the spray ring (11) has radial mounting surfaces (25, 28), which interact with the mounting surfaces (18, 26) on the outer and on the inner jacket surface (18, 26) of the groove (12) and by means of which the spray ring (11) is secured in the groove (12); and that the spray ring (11) has radial sealing surfaces (25), which interact with the sealing surfaces (26) on the outer and on the inner jacket surface (18, 26) of the groove (12) and by means of which the spray ring (11) is sealed against the surrounding area.

4. Dental preparation instrument, as claimed in claim 3, **characterized in that** the mounting surfaces (18, 26) of the spray ring (11) are designed as sealing surfaces.

5. Dental preparation instrument, as claimed in claim 3 or 4, **characterized in that** between the groove (12) and the spray ring (11) there is a press connection or a connection with a sealing connection means (32), such as glue or solder.

6. Dental preparation instrument, as claimed in any one of the claims 1 to 5, **characterized in that** the spray ring (11) has an axial abutment surface (29, 29'), which is spaced apart from the sealing surface (23) of the dividing wall (21) and which interacts with an axial abutment surface (30, 30'), arranged inside of the groove (12) or outside the groove (12) on the end face, in such a way that the axial abutment surface (29, 29') limits the axial deformation of the dividing wall (21) when the spray ring (11) is inserted into the groove (12).

7. Dental preparation instrument, as claimed in any one of the claims 3 to 6, **characterized in that** the spray ring (11) on its inner jacket surface or that the groove (12) on the inner jacket surface (26) has an axial guide surface (27), which is offset radially from the mounting surface (26), so that the guide surface (27) has a clearance at the spray ring (11) or at the groove (12) to the respective mounting surface (25) on the groove (12) or on the spray ring (11).

8. Dental preparation instrument, as claimed in any one of the claims 1 to 7, **characterized in that** the spray ring (11) has for both the water storage chamber (13) and for the air storage chamber (14) one or more nozzles (19, 20), which are connected to the water storage chamber (13) and one or more nozzles, which are connected to the air storage chamber (14); and each of these nozzles (19, 20) has an outlet opening, arranged on the end face (7).

9. Dental preparation instrument, as claimed in claim 8, **characterized in that** the nozzles (19, 20) in the spray ring (11) are arranged adjacent to each other, wherein the nozzle (19) for the water is arranged so as to be located radially inwards; and the nozzle (20) for the air is arranged so as to be located radially outwards; and wherein the nozzles (19, 20) are aligned at an angle (alpha, beta) to an axis of rotation (4) on the tool (5); and that the exit angle (alpha) of the nozzle (19) for the water is smaller than the exit angle (beta) of the nozzle (20) for the air.

## Revendications

1. Instrument de préparation pour la médecine dentaire (1) comprenant un outil (5) disposé dans une tête (3), la tête (3) présentant, sur sa face frontale tournée vers l'outil (5), une rainure annulaire (12) s'étendant à l'intérieur de la tête (3) dans le sens axial, pour la réception d'une bague de pulvérisation (11) permettant d'émettre de l'eau et de l'air en direction de l'outil (5), l'eau et l'air traversant la tête (3) pour être apportés à la rainure (12) et pour entrer dans la bague de pulvérisation (11), la bague de pulvérisation (11) formant avec la rainure (12) une réserve d'eau (13) et une réserve d'air (14), ladite réserve d'eau (13), au moins, étant hermétique vis-à-vis de la tête (3), **caractérisé en ce que** la rainure (12) présente une première ouverture (15) permettant d'apporter l'eau à la rainure (12), **en ce que** la rainure (12) présente une seconde ouverture (16) permettant d'apporter l'air à la rainure (12) et **en ce que** la bague de pulvérisation (11) sépare la réserve d'eau (13) de la réserve d'air (14) au moyen d'une paroi de séparation (21) s'étendant sur la circonférence, la paroi de séparation (21) s'étendant radialement vers l'extérieur et présentant une extrémité libre périphérique (22), une surface d'étanchéité périphérique (23) étant disposée au niveau de l'extrémité libre (22) de la paroi de séparation (21), laquelle surface, dans l'état monté de la bague de pulvérisation (11), est appliquée sous précontrainte de manière étanche soit sous forme de joint axial exclusif sur une surface de contact axiale (24), soit sous forme de joint radial exclusif sur une surface de contact radiale (24') dans la rainure (12) sous précontrainte, la paroi de séparation (21) étant déformée, dans l'état monté, de manière élastique ou élastico-plastique.

2. Instrument de préparation pour la médecine dentaire selon la revendication 1, **caractérisé en ce que** la première ouverture (15) se trouve sur le fond de la rainure (12) et **en ce que** la seconde ouverture (16) se trouve dans la surface d'enveloppe extérieure de la rainure (12).

3. Instrument de préparation pour la médecine dentaire selon la revendication 1 ou 2, **caractérisé en ce que** la bague de pulvérisation (11) présente des surfaces de fixation radiales (25, 28) qui coopèrent avec des surfaces de fixation (18, 26) présentes sur les surfaces d'enveloppe externe et interne (18, 26) de la rainure (12) et par le biais desquelles la bague de pulvérisation (11) est fixée dans la rainure (12), et **en ce que** la bague de pulvérisation (11) présente des surfaces d'étanchéité radiales (25) qui coopèrent avec des surfaces d'étanchéité (26) présentes sur les surfaces d'enveloppe externe et interne (18, 26) de la rainure (12) et par le biais desquelles la bague de pulvérisation (11) est hermétique vis-à-vis de l'environnement.

4. Instrument de préparation pour la médecine dentaire selon la revendication 3, **caractérisé en ce que** les surfaces de fixation (18, 26) de la bague de pulvérisation (11) sont conçues sous la forme de surfaces d'étanchéité.

5. Instrument de préparation pour la médecine dentaire selon la revendication 3 ou 4, **caractérisé en ce qu'**un assemblage par compression ou faisant appel à un moyen d'étanchéification (32), par exemple de la colle ou une brasure, est prévu entre la rainure (12) et la bague de pulvérisation (11).

6. Instrument de préparation pour la médecine dentaire selon l'une des revendications 1 à 5, **caractérisé en ce que** la bague de pulvérisation (11) présente une surface de butée axiale (29, 29') espacée de la surface d'étanchéité (23) de la paroi de séparation (21), qui coopère avec une surface de contact axiale (30, 30') située à l'intérieur de la rainure (12) ou à l'extérieur de la rainure (12) sur la face frontale, de telle sorte que la surface de butée axiale (29, 29') délimite la déformation axiale de la paroi de séparation (21) lors de l'introduction de la bague de pulvérisation (11) dans la rainure (12).

7. Instrument de préparation pour la médecine dentaire selon l'une des revendications 3 à 6, **caractérisé en ce que** la bague de pulvérisation (11) présente, sur sa surface d'enveloppe interne ou **en ce que** la rainure (12) présente, sur la surface d'enveloppe interne (26), une surface de guidage axiale (27) qui est décalée radialement de la surface de fixation (26), de sorte que la surface de guidage (27) présente un jeu au niveau de la bague de pulvérisation (11) ou de la rainure (12) par rapport à la surface de fixation (25) respectivement située au niveau de la rainure (12) ou de la bague de pulvérisation (11).

8. Instrument de préparation pour la médecine dentaire selon l'une des revendications 1 à 7, **caractérisé en ce que** la bague de pulvérisation (11) présente, aussi bien pour la réserve d'eau (13) que pour la réserve d'air (14), une ou plusieurs buses (19, 20) reliées à la réserve d'eau (13) et à la réserve d'air (14) et présentant chacune une ouverture de sortie située sur la face frontale (7).

9. Instrument de préparation pour la médecine dentaire selon la revendication 8, **caractérisé en ce que** les buses (19, 20) sont disposées adjacentes dans la bague de pulvérisation (11), la buse (19) destinée à l'eau étant disposée radialement à l'intérieur et la buse (20) destinée à l'air étant disposée radialement à l'extérieur, lesdites buses (19, 20) étant orientées vers l'outil (5) selon un angle (alpha, bêta) par rapport à un axe de rotation (4) et **en ce que** l'angle de sortie (alpha) de la buse (19) destinée à l'eau est inférieur à l'angle de sortie (bêta) de la buse (20) destinée à l'air.
